Europäisches Patentamt

European Patent Office

Office européen des brevets

(19)

(11) EP 1 106 436 A1

(12) EUROPEAN PATENT APPLICATION

(43) Date of publication:
13.06.2001 Bulletin 2001/24

(51) Int Cl.$^7$: **B60R 7/02**

(21) Application number: 99204179.8

(22) Date of filing: 09.12.1999

(84) Designated Contracting States:
AT BE CH CY DE DK ES FI FR GB GR IE IT LI LU MC NL PT SE
Designated Extension States:
AL LT LV MK RO SI

(71) Applicant: 3M Innovative Properties Company
St. Paul, Minnesota 55133-3427 (US)

(72) Inventor: Kreckel, Karl Werner
41453 Neuss (DE)

(74) Representative: Voortmans, Gilbert J.L. et al
3M Europe S.A./N.V.
OIPC
Hermeslaan 7
1831 Diegem (BE)

(54) **Method and sheet to restrain movement of an article on a fibrous surface in a vehicle**

(57) The present invention provides a method to restrain movement of an article on a fibrous surface in a vehicle, comprising:

- providing an article having a surface A having a static coefficient of friction $COF_3$ of 0.7 or less relative to said fibrous surface;
- providing one or more non-tacky skid resistance providing sheets that each have opposite first and second major surfaces;
- putting one or more of said non-tacky skid resistance providing sheets on said fibrous surface such that said first major surface faces the fibrous surface and said one or more non-tacky skid resistance providing sheets together cover only a part of said fibrous surface; and
- contacting said surface A of said article with the second major surface of said non-tacky skid resistance providing sheet or sheets such that said non-tacky skid resistance providing sheet or sheets cover at least part but not all of said surface A of said article,

said first major surface of said non-tacky skid resistance providing sheet having a static coefficient of friction $COF_1$ relative to the fibrous surface and said second major surface having a static coefficient of friction $COF_2$ relative to said surface A of said article, each of said static coefficient of friction $COF_1$ and $COF_2$ being larger than the static coefficient of friction than the static coefficient of friction $COF_3$.

Fig. 2

Printed by Jouve, 75001 PARIS (FR)

**Description**

1. Field of the invention.

The present invention relates to a sheet and method to restrain movement of an article on a fibrous surface in a vehicle, for example on a fibrous surface of a trunk of a car.

2. Background of the invention.

Holding articles or restraining articles from moving in a moving vehicle, while in transit, presents a problem because of the tendency of such articles to overturn or slide under the action of forces resulting primarily from acceleration and deceleration during starting and stopping of the vehicle. For example, a briefcase resting on a car seat or lying in the trunk may slide around or fall off the seat during movement of the vehicle. This may cause damage to the outside of the briefcase and/or disturb or damage the contents of the briefcase.

The art has already provided many different approaches to solve this problem. For example, EP 381 911 describes a system in which a belt is winded from a self tightening spool around an article and the end of the belt is engaged in a special sparing in the floor of for example a trunk. The spool is similarly engaged to the floor as the belt. EP 507 161 describes a device for fastening containers in the luggage compartment of a vehicle, comprising an elastic strap fastenable at its ends. The strap has a non-slippably formed surface on the upper and inner side such that when an article is put on the strap, the strap serves as a non-slippable underlayer for the article. When the article is biased over the article, the strap functions as a clamping means. This device has the disadvantage that special engagement means are necessary in the trunk floor. Moreover, these straps cannot be stored away conveniently when not needed.

Dividers have also been proposed to solve the problem of restraining movement of articles in a moving vehicle. For example, DE 297 11 979 U1 proposes a special plate that is put in the trunk and to which dividers can be engaged and positioned as desired. However, this system is inconvenient and cumbersome. US 5,392,972 discloses a collapsible partition for a trunk which includes a transverse extending wall member to which side wall members are pivotally mounted. The device however also requires anchor portions to be present in the trunk itself. Moreover, this device is cumbersome and bulky and therefore difficult to store away in the vehicle when not needed. Further divider systems are shown in US 4,941,784, US 5,129,612, US 4,718,584 and US 4,538,737.

US 5,125,205 further discloses a device for organizing articles that includes a plurality of wall members disconnectably connected together at their ends to form a closed perimeter wall of a predetermined configuration. The area bounded by the perimeter wall is subdivided into a plurality of compartments by a primary divider wall and a plurality of subdivider walls wherein the subdivider walls are removable and or repositionable. e.g. by means of a hook and loop system, to change the number and size of compartments. US 4,838,745 similarly describes a trunk organizer that comprises blocks of rubber having a rubber coating and the hook portion of a hook and loop fastener system such that the rubber block can be secured to the fibrous surface on the floor of a car trunk. These systems however still suffer from the disadvantage of being bulky and therefore using valuable space in the trunk.

US 5,065,922 discloses a tray that has VELCRO™ strips on the bottom providing the hook component of a hook and loop fastener. Articles are put in the tray and the tray is secured to the fibrous surface on the floor of a trunk.

US 5, 662,305 discloses a securing device featuring a vertical plate portion which folds to conform to an item to be secured, floor attachment plates which fold, relative to the vertical plate portion, and means for releasably affixing the floor attachment plates to the surface on which is placed the item to be secured. The item may be secured to a carpet surface via a hook and loop fastener system.

Finally, DE 44 39 208 and DE 298 03 353 each describe the use of a special mat that can be put on the floor of a trunk to restrain movement of articles thereon by means of antifriction. However, these mats are expensive, are inconvenient to use and moreover use considerable space when not needed and stored in the trunk.

Accordingly, the present invention seeks to provide a further solution to the problem of restraining articles from movement in a moving vehicle. Desirably, such solution should be simple, effective, of low cost, convenient and easy to use. Preferably a device for restraining movement of the articles is also small such that it can be conveniently stored in the trunk or elsewhere in the vehicle without utilising too much space.

3. Summary of the invention.

The present invention solves the problem of restraining articles from movement on a fibrous surface in a moving vehicle by providing a non-tacky skid resistance providing sheet, hereinafter also called skid resistant sheet. Typically, the present invention can be utilised to restrain movement of articles that have a static coefficient of friction of 0.7 or less relative to the fibrous surface. One or more skid resistant sheets utilised in accordance with the present invention are placed on a fibrous surface and an article that is to be restrained is put thereon. Preferably, two or more skid resistant sheets spaced apart from each other are placed on the fibrous surface. An important feature of the present invention is that the skid resistant sheet need only cover a part of the fibrous surface and only part of the article needs to cover the skid resistant sheet. The skid resistant sheet is simply placed on the fibrous surface without a need to attach the skid resistant sheet to attachment means specially provided therefor on or in the fibrous surface. It will typically suffice that the skid resistant sheet contacts the fibrous surface or that one surface of the skid resistant sheet mechanically and reversibly engages with the fibrous surface or contains means that penetrate into the fibrous surface without engaging with the fibrous surface. A further feature of the invention is that the static coefficient of friction of the opposite major surfaces relative to the article and the fibrous surface stand in a particular relationship relative to the static coefficient of friction of the article relative to the fibrous surface.

Thus, in one aspect the invention provides a method to restrain movement of an article on a fibrous surface in a vehicle, comprising the steps of (which may be carried out in the listed order as well as in any other order as desired):

- providing an article having a surface A having a static coefficient of friction $COF_3$ of 0.7 or less relative to said fibrous surface;
- providing one or more non-tacky skid resistance providing sheets that each have opposite first and second major surfaces;
- putting one or more of said non-tacky skid resistance providing sheets on said fibrous surface such that said first major surface faces the fibrous surface and said one or more non-tacky skid resistance providing sheets together cover only a part of said fibrous surface; and
- contacting said surface A of said article with the second major surface of said non-tacky skid resistance providing sheet or sheets such that said non-tacky skid resistance providing sheet or sheets cover at least part but not all of said surface A of said article,

said first major surface of said non-tacky skid resistance providing sheet having a static coefficient of friction $COF_1$ relative to the fibrous surface and said second major surface having a static coefficient of friction $COF_2$ relative to said surface A of said article, each of said static coefficient of friction $COF_1$ and $COF_2$ being larger than the static coefficient of friction than the static coefficient of friction $COF_3$.

By the term "non-tacky" is meant that the sheets do not stick to the fibrous surface and do not feel tacky at room temperature.

The static coefficients of friction in connection with the present invention is measured according to Deutsche Industrie Norm (DIN) 53 375-B with a weight of 1200g and the surface of the test substrate being $40cm^2$. In accordance with a preferred embodiment in connection with the present invention, the static coefficient of friction $COF_1$ and $COF_2$ are both at least two times the value for the static coefficient of friction $COF_3$. When both $COF_1$ and $COF_2$ are larger than $COF_3$ and in particular when they are at least twice as large as $COF_3$, articles can be restrained from movement in a moving vehicle even when the skid resistant sheet covers only part of the fibrous surface and article. Further, the second major surface of the skid resistant sheet which will be in contact with the article to be restrained preferably has a static coefficient of friction ($COF_2$) of at least 1.2 relative to the surface of the article with which it is in contact.

Typically, the fibrous surface will be a carpet provided for example in the trunk of a vehicle, e.g. a motor vehicle such as a car or another fibrous surface such as a fibrous material covering a car seat. The first major surface of the skid resistant sheet preferably has the hook component of a hook and loop fastening means. Such hook component can mechanically and reversibly engage with the fibrous surface if that surface comprises the loop component of a hook and loop fastening means. The fibrous surface used in vehicles may not have such a loop component and the hooks may then simply penetrate the fibrous surface. In an alternative embodiment, the first major surface of the skid resistant sheet may have a plurality of stems that can penetrate the fibrous surface without mechanically engaging with the fibrous surface even if that contains a loop component of a hook and loop fastening means. This embodiment offers the advantage over the hook and loop system in that when the skid resistant sheet is removed, no fibers are torn away from the fibrous surface leaving that surface unaltered. On the other hand, the hook and loop fastening system has the advantage that when the skid resistant sheet is not needed, they can be attached to a vertical fibrous surface in the vehicle such as a side wall of the trunk.

As mentioned above, the skid resistant sheet need only cover part of the fibrous surface and surface of the article. Accordingly, one or more fairly small skid resistant sheets can be employed. Preferably, the largest dimension of the skid resistant sheet will not be more than 50cm. Also, the second major surface of the skid resistant sheet will typically be not more than $150cm^2$. The skid resistant sheet in connection with the invention may take any particular form such as rectangular, circular, elliptical or an irregular shape such as a cloud. Generally, the skid resistant sheet will be in the form of a longitudinal strip.

In another aspect of the present invention, there is provided a non-tacky skid resistance providing sheet having opposite first and second major surfaces, said first major surface having hooks for engaging with loop portions of a fibrous surface or said first surface having stems capable of penetrating at least partially a fibrous surface, and said second major surface having a static coefficient of friction of at least 1 relative to a stainless steel surface and the largest dimension of said skid resistance providing sheet being not more than 50cm long.

The skid resistant sheet for use in connection with this invention preferably have a thickness of not more than 3.5mm and more preferably between lmm and 2.5mm. A thickness of more than 3.5mm will generally not be economical and moreover reduces the advantage of easily storing the skid resistant sheet away when they are not needed. Generally, the thickness will also not be less than 0.8 mm so as to provide a certain stiffness to the skid resistant sheet which makes handling and placing of the sheets more easy.

4. Brief description of the drawings

The invention will further be described in more detail with reference to the following drawings illustrating the invention without however intending to limit the invention thereto:

Fig. 1 is a schematic drawing of a non-tacky skid resistance providing sheet in accordance with the invention.

Fig. 2 shows the use of the non-tacky skid resistance providing sheet in the trunk of a car.

Fig. 3 schematically shows a further embodiment of a non-tacky skid resistance providing sheet in connection with this invention.

Fig. 4 is a cross-section along line A-B in Fig.2.

5. Detailed description

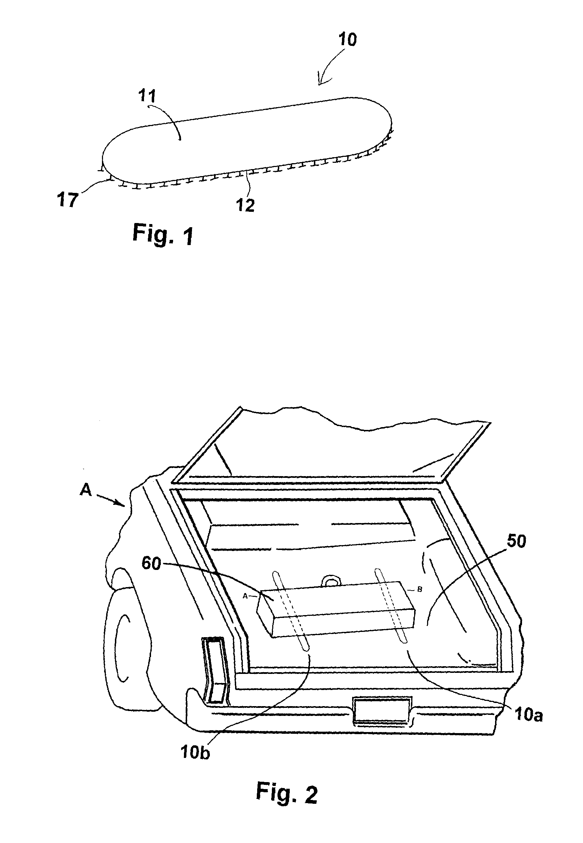

According to a preferred embodiment of the present invention illustrated in Figure 1, the skid resistance providing sheet 10 has a first major surface 12 and an opposite second major surface 11 which has the static coefficient of friction $COF_2$ in accordance with the present invention so as to provide skid resistance. The skid resistant sheet 10 is provided in the form of a strip and is rounded at the short sides of the strip. First major surface 12 is provided with a plurality of hooks that form the hook component of a hook and loop fastening means. The hooks may have a density of 15.5 pins per square cm to 387.5 pins per square cm (100 pins per square inch to 2500 pins per square inch ) and preferably 23.2 to 124.0 (150 to 800). Most preferably the density is between 31.0 to 62.0 pins per square cm (200 to 400 pins per square inch) to provide hooks that attach well to a fibrous surface yet do not damage that surface too much.

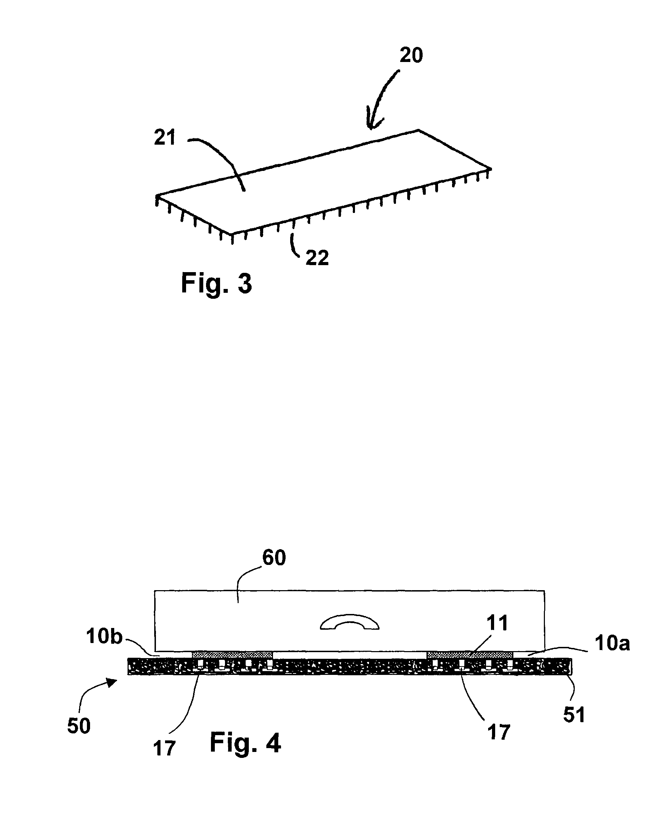

An alternative embodiment of the present invention is shown in figure 3. The skid resistant sheet 20 shown in this figure has a second major surface 21 that provides the skid resistance and an opposite first major surface that has a plurality of stems 22. These stems are capable of penetrating into the fibrous surface. The skid resistant sheet 20 is in the form of a strip. Generally, the density of the stems is not critical and will typically be between 15.5 and 465.0 pins per square cm (100 and 3000 pins per square inch).

According to a typical embodiment of the present invention, the skid resistant sheets such as exemplified in figures 1 and 3 will comprise of a laminate of a film bearing on one major surface a plurality of hooks or a plurality of stems and a layer that provides skid resistance. Details about such a layer will be described below. According to one method of manufacturing of such a laminate, the composition of the skid resistance providing layer may be coated on the major surface of the film opposite to the major surface that bears the hooks or stems. The coating may be continuous or discontinuous to provide a continuous or discontinuous layer. Also, a plurality of layers may be provided or coated. For example, a primer layer may be first provided and then a thin layer to skid resistance providing material may be provided thereon. Coating techniques that can be used are not particularly limited and include for example spraying, solvent coating, strip coating and screen printing A further useful method includes hot melt extruding the composition of the skid resistance providing layer. According to a still further method of applying the skid resistance providing layer, the layer can be adhered to the appropriate film surface by means of an adhesive such as pressure sensitive adhesive. The skid resistance providing layer and the film with the hooks or stems may also be bonded to each other by means of ultrasonic welding or heat.

The manufacturing of films with hooks of various profiles is well-known in the art and can be found for example in US 5,868,987, US 5,845,375, US 5,607,635, US 5,879,604, US 5,077,870, US 5,607,635, US 5,679,302, US 4,894,060, US 4,056,593 WO 98/20767, WO 98/15201, US 5,315,740, US 4,984,339, US 4,794,208, US 4,775,310, US 5,800,845, US 5,755,015, US 5,781,969, US 5,792,408 and EP 0 709 038. Films with stems can be manufactured in accordance with the teaching of US 4,959,265.

The second major surface of the skid resistant sheet in connection with this invention is typically achieved by a skid-resistant layer. However, in case a film with hooks or stems is being used and the major surface of that film, which is opposite to the major surface having hooks or stems, has the desired static coefficient of friction $COF_2$ in connection with the present invention, a skid-resistant layer may not be necessary. When used, the skid-resistant layers are preferably smooth. Qualitatively, the term smooth means the absence of sharp or angular protrusions and/or indentations on the surface of the skid-resistant layer and also refers to the feel of the surface when touched, i. e., to the tactile characteristics of the coating. That is, the coating feels "smooth" to the touch. The term smooth skid-resistant layer includes, for example, essentially flat skid resistant layers but also skid-resistant layers comprising essentially non-sharp and/or non-angular protrusions such as essentially spherical protrusions or protrusions having the geometry of a truncated cone in an essentially regular and essentially dense array so that the appearance of the surface to the hand is essentially flat. The smooth surface of the skid-resistant layer can be either matt or glossy in appearance.

The skid resistant layer forming the second major surface of the skid resistant sheet may contain printing thereon or embossed therein or alternatively, the skid resistant layer may be provided transparent and may be overlaying a printing. In a particular preferred embodiment, the second major surface of the skid resistant sheet is designed to be reflective which can be achieved by providing the skid resistant layer as a reflective layer or alternatively by making the skid resistant layer transparent and having a reflective layer underlying the skid resistant layer.

Skid-resistant materials that can be used to form the second major surface of the skid resistant sheet, are known and can be selected, for example, from a group of polyolefin based polymeric materials. Suitable polyolefins include, for example, olefin homopolymers such as polypropylene and, in particular, atactic polypropylene, polyethylene and, in particular, low density polyethylene (LDPE) or linear low density polyethylene (LLDPE), or polybutene, homopolymers of substituted olefins such as, for example, polyvinyl acetate or polyethylene ethyl acetate, olefin-copolymers such as, for example, polyethylene vinyl acetate, ethylene-acrylate copolymers, ethylene methacrylate copolymers or copolymers of ethylene with other polar comonomers, and polyolefin plastomers such as ethylene/1-octene or ethylene/lbutene copolymers which are obtainable by using the metallocene catalyst system. The skid-resistant properties of polyolefin plastomers can be modified by incorporating additives such as fatty acid amides or inorganic materials such as silica as is described, for example, in J. Plastic Film Sheeting, 13 (1997), p. 142-149. The polyolefin based polymeric materials may comprise blends of the above polyolefins or blends of one or more of the above polyolefins with other polymers. The polyolefin based polymeric materials may optionally comprise additives such as, for example, one or more plasticizers such as naphtenic or aliphatic oil, solvents, stabilizing agents and antioxidants.

Skid-resistant materials which are useful in the present invention, can further be selected from a group of polymeric materials based on thermoplastic elastomer materials such as olefin-based elastomers like ethylene-propylene copolymers (EPM) or ethylenepropylene-diene terpolymers (EPDM). Another preferred class of thermoplastic elastomer materials comprises synthetic rubbers such as, for example, styrene-butadiene-copolymers and A-B-A triblock copolymers wherein A represents a crystalline styrene end block and B is an amorphous polybutadiene, polyethylene-butylene or polyisoprene center block. Other classes of preferred thermoplastic elastomers include, for example, non-curing polyurethane elastomers and polyester elastomers. The polymeric materials based on thermoplastic elastomer materials may comprise blends of the above thermoplastic elastomers or blends of one or more of the above thermoplastic elastomers with other polymers. Especially preferred are blends comprising at least one polyolefin and at least one thermoplastic polymer. Such blends or the polymer materials based on thermoplastic elastomer materials, respectively, may optionally comprise additives such as plasticizers, solvents, UV-stabilizers, antioxidants or fillers.

The skid-resistant materials described above and methods of their preparation are known, and most of such materials are readily commercially available. Representative thermoplastic elastomer materials comprising block copolymers having crystalline styrene blocks and amorphous polyolefin blocks are available, for example, from Shell Chemical Co. under the trade designations Kraton D, Kraton G and Kraton RP. Preferred copolymers of olefins and polar comonomers are available from Elf Atochem under the designation Lotryl (ethylene-acrylate copolymers) and Evatane (ethylene-vinyl acetate copolymers), respectively. Suitable polyolefin plastomers are commercially available from Dow Chemicals Co. under the designation Affinity. A further material suitable as a skid-resistant material is TESA ™ Noppenband, available as # 644514, grau silicone (700 microns) from Beiersdorf AG; Hamburg, Germany. This latter material has a smooth uneven major surface and an opposite major surface that comprises an adhesive. Accordingly, this material can be adhered by this adhesive to a film with hooks or stems as described above.

Figure 2 illustrates the use of the skid resistant sheet in accordance with the present invention in a trunk of a car. Skid resistant sheets 10a and 10b are placed on the fibrous surface 50, for example a carpet having loops, in the trunk generally perpendicular to the axle and at a desired distance from each other. An article 60 to be restrained is then placed on top of the two skid resistant sheets 10a and 10b. Figure 4 shows a cross-section along line A-B in figure 2. As can be seen from this figure, the skid resistant sheets 10a and 10b are each provided with hooks 17 of a hook and loop fastener system. Further show is that these hooks 17 penetrate into the fibrous surface 50 where the hooks engage with the loops 51 of the fibrous surface 50.

The invention is further illustrated by means of the following examples without however the invention to limit the invention thereto.

EXAMPLES

Test Methods

Static Coefficient of Friction

Coefficient of friction was measured according to Deutsche Industrie Norm (DIN ) 53 375 - B.

Skid resistant sheet material to be tested were adhered to the surface of a 7.5 cm x 23.5 cm aluminum test plate using a double-coated adhesive Tape # 444 from 3M Company, St. Paul, MN / USA. The skid resistant sheet material had the dimensions of 7.5 cm x 14.5 cm and was adhered to the aluminum test plate over its entire area with double-coated adhesive tape.

The bottom face of the sled comprised a flat surface area of 40 cm$^2$ (6.3 cm x 6.3cm) of the substrate material, for example, polished stainless steel, a smooth polymeric film or card board. The total weight of the sled and 40 cm$^2$ test substrate was 1200 g.

Substrates:

1) Stainless Steel The surface of the stainless steel plate used for testing coefficient of friction had an average surface roughness value $R_a$ of 0.1 and an average peak to valley height value $R_z$ of 1.0. The roughness values $R_a$ and $R_z$ were determined by a laser profilometer available from UBM Messtechnik GmbH, Ettlingen, Germany, model number UB-16. The roughness values were calculated by this instrument in accordance with Deutsche Industrie Norm (DIN) 4768 and DIN 4762. The stainless steel plate was cleaned prior to each measurement using a tissue with methyl ethyl ketone, then with a 1:1 mixture of isopropyl alcohol and water, then again with methyl ethyl ketone and finally allowed to air dry.

2) LDPE Low density polyethylene film having a thickness of 60 microns was obtained as Type 16 00 000, transparent LDPE having a density of 0.923 from Folienfabrik Forchheim, Forchheim, Germany.

4) Synthetic leather made of plasticized PVC, obtained from Firma Wagner, Müllenstrasse 223, Mönchengladbach, Germany

5) Cardboard Virgin fiberboard available as Mosinee 696C from Mosinee Paper Corporation, Wisconsin, USA.

The static coefficient of friction was calculated as follows:
Static coefficient of friction ($\mu_s$)

$$\mu_s = F_s/F_\rho$$

where

$F_s$ = static frictional force
$F_\rho$ = the normal force (the force acting perpendicular to the surfaces in contact)

Measurements were made using a commerically available tensile tester (Instron (TM)). Test data were collected and coefficient of friction results were calculated using the software package testXpert ® Version 04.96 / T-01-00 (Copyright 1996) available from Zwick GmbH & Co in Ulm, Germany. The test sled was pulled for a total distance of ca. 7.5 cm at a rate of 100 mm / min.

The data used for calculating the static coefficient of friction were generated in one test. The test was repeated using three different samples of skid-resistant sheet material.

Qualitative 90° Peel Test

Strips of the laminate prepared in the examples were pressed onto a carpet by hand. The strips were then removed by grasping one end and pulling away from the carpet at roughly 90°. Relative removal force and fiber pulling, if any, were noted.

Examples 1 to 4 describe the preparation of skid resistance providing sheets according to the invention:

Example 1

A mixture comprising 58% by weight hydrogenated block copolymer (Kraton G1657 from Shell Chemical Company), 39% by weight polypropylene (Huntsman WL106 from Huntsman Corporation), 2.4% by weight black pigment (available as 68749PP from Clariant, Basel, Switzerland) and 0.6% by weight white pigment (available as 1000105S from Clariant, Basel, Switzerland) was prepared and combined in a standard twin-screw extruder.

The temperature of the polymer melt was ca 232° C (450° F). The extruder was divided into four temperature zones, advancing from 210° C to 232° (410 to 450° F C). The exit die and adapters were set at 246° C (475° F).

The molten polymer sheet was extruded in a thickness of about 0.9 mm and fed directly between the top and bottom rolls of a vertical stack of three temperature-controlled co-rotating 5-inch diameter (12.70 cm) cylindrical rolls on a vertical three roll casting station. The top roll was temperature controlled to 71° C (160° F), the middle roll to 28° C (82° F) and the bottom roll to 12° C (54° F).

A hook structure film was simultaneously introduced into the nip of the top and middle roll of the vertical stack, the hook side of the film contacting the top chrome plated steel roll for about a 90° wrap and rotated into the nip.

The mushroom type hook structure film was formed using the method described in US 5,077,870 (Melbye): The stem height was approximately 0.5 mm (0.020 inches), the stem diameter was 0.4 mm (0.016 inches) and the head diameter was 0.76 mm (0.030 inches). The stems were spaced about 1.4 mm (0.055 inches) apart and the density of the stems was 50 stem per cm$^2$ (325 stems per inch$^2$). The hooked stems were formed integrally with a substrate layer sheet (which is 4.5 mil thick or 114-127 microns) from SRD7-560 impact copolymer resin from Shell Chemicals, Houston, Texas.

A fabric scrim (Milliken & Company, Spartanburg, South Carolina, style #851357/005) was also simultaneously introduced into the nip of the top and middle rolls of the vertical stack. The fabric, contacting the smooth side of the hook structure, was also rotated into the nip. As the hook structure film and fabric scrim were rotated into the nip, some of the molten polymer penetrated through the scrim and durably melt bonded to the hook structure film. As the molten sheet was solidified by the chilled roll surfaces, the top roll released the laminated sheet to follow the middle roll to the bottom roll. The quenched sheet thus had a molded pattern derived from the plasma pattern of the middle roll thereon, and was subsequently stripped away from the bottom roll. The top rubber layer of the finished laminate had a thickness of about 0.88 mm. Total thickness of the finished laminate construction was about 1.6 mm.

The laminate was then die-cut into strips having the dimensions of 45 cm long by 2.5 cm wide. The ends of the strips were rounded to improve aesthetic appearance.

Example 2

Hook sheet, scrim and melted polymer were laminated together as in Example 1. The hook sheet was made by the extrusion method described in US 4,894,060 (Nestegard). The hook density was 92.2 pins/cm$^2$ (595 pins/in$^2$). The distance between rows of hooks in the cross web direction (CD) was 8.97 mm/10 rows and the distance between rows of hooks in the machine direction (MD) was 12.09 mm/10 rows. The cap diameter in CD was 488 microns and the cap diameter in MD (cut width) was 321 microns. the stem diameter in CD was 240 microns and in MD (cut width) was 321 microns. The height of each hook was 429 microns. The caliper of the hook backing was 172 microns and the total thickness of the hook sheet was 601 microns.

Example 3

Example 1 was repeated with the exception that the hook sheet bearing hooks with mushroom shape caps having a different density were employed. The process of producing such hooks is described in US 5,868,987 (Kampfer).

The hook density was 261.6 pins/cm$^2$ (1688 pins/in$^2$). The distance of rows was 6.27 mm/10 rows in the cross web direction (CD) and 6.09 mm/10 rows in the machine direction (MD). Cap diameter (CD) was 417 microns and cap diameter (MD,cut width) was 263 microns. The stem diameter (CD) was 210 microns, and the stem diameter (MD, cut width) was 200 microns. The hook height was 308 microns. The thickness of the hook backing was 95 microns. The total thickness of the hook sheet was 413 microns.

Example 4

A skid resistant sheet with stems was produced according to the procedure of example 1 except that the capping step in the process of example 1 to produce hooks was omitted. This method is described in US 4,959,265 (Wood).

The stems on the backing were present at a density of 387.5 - 434.0 pins/cm$^2$ (2500-2800 pins/in$^2$).

Tables 1 and 2 list the static coefficient friction $COF_1$ (first major surface or the surface with hooks or stems against various carpets) and $COF_2$ (second major surface of the skid resistant sheet against common surfaces of articles to be restrained) of each the examples 1 to 4.

Table 1

| Example | Carpet Type 1 | Carpet Type 2 | Carpet Type 3 |
|---------|---------------|---------------|---------------|
|         | $COF_1$, 1200 g | $COF_1$, 1200 g | $COF_1$, 1200 g |
| 1 | ** | ** | 1.0 |
| 2 | ** | ** | 1.2 |
| 3 | ** | ** | ** |
| 4 | 3.6 | 3.6 | 1.6 |

** Not measurable. Coefficient of friction too high to measure.

Coefficient of friction of several commonly encountered object surfaces ($COF_2$) was measured against the skid-resistant layer forming the second major surface of the laminate described in Examples 1 to 4. Results are summarized in Table 2

Table 2

| Ex. | LDPE | Cardboard | Syn. Leather | Steel |
|-----|------|-----------|--------------|-------|
|     | $COF_2$, 1200g | $COF_2$, 1200g | $COF_2$, 1200g | $COF_2$ 1200g |
| 1-4 | 2.0 | 2.0 | 1.2 | 2.0 |

The coefficient of friction of several common surfaces of articles to be restrained was measured against each of three carpet types ($COF_3$). These measurements are summarized in Table 3.

Table 3

| Carpet | LDPE | Cardboard | Syn. leather | Steel |
|--------|------|-----------|--------------|-------|
|        | $COF_3$ 1200g | $COF_3$, 1200g | $COF_3$, 1200g | $COF_3$, 1200g |
| Type 1 | 0.4 | 0.4 | 0.4 | 0.3 |
| Type 2 | 0.4 | 0.3 | 0.4 | 0.3 |
| Type 3 | 0.5 | 0.6 | 0.5 | 0.3 |

Carpet surfaces

Type 1    VW Nadelflies PP Dilours 8 JS ART CD 72604 from Scheffler Teppichboden GmbH, Bamberg, Germany
Type 2    VW Nadelflies PP glatt 1 BS ART CD 7302 from Scheffler Teppichboden GmbH, Bamberg, Germany
Type 3    Peugot Velour ART CD 81404 from Scheffler Teppichboden GmbH, Bamberg, Germany

Qualitative 90° peel measurements of laminates from three carpet types were also made. 90° peel measurements are summarized in Table 4.

Table 4

| Example | Carpet type | Result of peel test* |
|---------|-------------|----------------------|
| 1 | 1 | Low peel force, no fiber removal |
| 1 | 2 | Good attachment, slight fiber removal |

Table 4   (continued)

| Example | Carpet type | Result of peel test* |
|---------|-------------|----------------------|
| 1 | 3 | No attachment |
| 2 | 1 | High peel force, high removal of fibers, carpet surface is visibly altered |
| 2 | 2 | High peel force, moderate removal of fibers, carpet surface visibly altered |
| 2 | 3 | No peel force observed, no attachment |
| 3 | 1 | Strong attachment, high removal of fibers, carpet surface visibly altered |
| 3 | 2 | Good attachment, very little fiber removal |
| 3 | 3 | No attachment |
| 4 | 1 | No attachment |
| 4 | 2 | No attachment |
| 4 | 3 | No attachment |

Carpet types

Type 1     VW Nadelflies PP Dilours 8 JS ART CD 72604 from Scheffler Teppichboden GmbH, Bamberg, Germany
Type 2     VW Nadelflies PP glatt 1 BS ART CD 7302 from Scheffler Teppichboden GmbH, Bamberg, Germany
Type 3     Peugot Velour ART CD 81404 from Scheffler Teppichboden GmbH, Bamberg, Germany

Two of the skid resistant sheets of example 1 were placed in the trunk of a BMW Model 528 having a loop-type carpet similar to that of the above mentioned type 1 carpet. The strips were placed so that the length of the strip extended parallel to the rear axle. The strips were placed parallel to each other and about 20 cm apart. A synthetic leather-covered briefcase was placed so that one of its major flat surfaces contacted most of the area of the two strips. After driving at high speed and in stop-and-go traffic, the briefcase remained in the position in which it was originally placed.

Comparative Example 1

A commercially available trunk inlay mat (available as product number B 67 68 00 15 W 202, black, from Mercedes Benz, Stuttgart, Germany) comprising a fabric bearing rubber spots on each surface was tested as above. The coefficient of friction of the bottom of the mat against the carpet ($COF_1$) was measured. Results are summarized in Table 5.

Table 5

| Carpet | $COF_1$ 1200 g |
|--------|----------------|
| Type 1 | 1.2 |
| Type 2 | 1.3 |
| Type 3 | 1.1 |

Type 1     VW Nadelflies PP Dilours 8 JS ART CD 72604 from Scheffler Teppichboden GmbH, Bamberg, Germany
Type 2     VW Nadelflies PP glatt 1 BS ART CD 7302 from Scheffler Teppichboden GmbH, Bamberg, Germany
Type 3     Peugot Velour ART CD 81404 from Scheffler Teppichboden GmbH, Bamberg, Germany

Various surfaces against the top of the mat (COF2) was also evaluated for Comparative Example 1. Results are shown in Table 6.

Table 6

| Example | LDPE | Steel |
|---|---|---|
| | COF$_2$, 1200 g | COF$_2$, 1200 g |
| Comp. Ex 1 | 1.0 | 1.1 |

Although the mat of comparative example 1 was found to be effective to restrain movement of articles in a moving vehicle, the mat of this example has the disadvantage of being large, inconvenient and expensive compared to the skid resistant sheets of the present invention.

**Claims**

1.   Method to restrain movement of an article on a fibrous surface in a vehicle, comprising:

-   providing an article having a surface A having a static coefficient of friction COF3 of 0.7 or less relative to said fibrous surface;
-   providing one or more non-tacky skid resistance providing sheets that each have opposite first and second major surfaces;
-   putting one or more of said non-tacky skid resistance providing sheets on said fibrous surface such that said first major surface faces the fibrous surface and said one or more non-tacky skid resistance providing sheets together cover only a part of said fibrous surface; and
-   contacting said surface A of said article with the second major surface of said non-tacky skid resistance providing sheet or sheets such that said non-tacky skid resistance providing sheet or sheets cover at least part but not all of said surface A of said article,

said first major surface of said non-tacky skid resistance providing sheet having a static coefficient of friction COF$_1$ relative to the fibrous surface and said second major surface having a static coefficient of friction COF$_2$ relative to said surface A of said article, each of said static coefficient of friction COF$_1$ and COF$_2$ being larger than the static coefficient of friction than the static coefficient of friction COF$_3$.

2.   Method according to claim 1 wherein COF$_1$ and COF$_2$ are at least two times larger than COF$_3$.

3.   Method according to claim 1 or 2 wherein said first major surface of said non-tacky skid resistance providing sheet comprises a hook component of a hook and loop fastening means and said fibrous surface comprises the loop component of a hook and loop fastening means.

4.   Method according to claim 1 wherein said non-tacky skid resistance providing sheet has on said first major surface a plurality of stems capable of penetrating said fibrous surface without mechanically engaging therewith.

5.   Method according to any of the previous claims wherein COF$_2$ is at least 1.2.

6.   Method according to any of the previous claims wherein said second major surface of said non-tacky skid resistance providing sheet has a layer consisting of one or more compounds selected from the group consisting of polyolefin based polymeric materials and materials based on thermoplastic elastomer materials.

7.   Method according to any of the previous claims wherein said second major surface of said non-tacky skid resistance providing sheet is smooth.

8.   Method according to any of the previous claims wherein said second major surface of said non-tacky skid resistance providing sheet has protrusions that are not sharp and not angular.

9.   Method according to any of the previous claims wherein the largest dimension of said non-tacky skid resistance providing sheet is not more than 50cm long.

10.   Method according to any of the previous claims wherein said non-tacky skid resistance providing sheet has a thickness between 1mm and 2.5mm.

11. Method according to any of the previous claims wherein the size of said second major surface is not more than 150 cm$^2$.

12. Non-tacky skid resistance providing sheet having opposite first and second major surfaces, said first major surface having hooks for engaging with loop portions of a fibrous surface or said first surface having stems capable of penetrating at least partially a fibrous surface, and said second major surface having a static coefficient of friction of at least 1 relative to a stainless steel surface and the largest dimension of said skid resistance providing sheet being not more than 50cm long.

13. Non-tacky skid resistance providing sheet according to claim 12 wherein said second major surface is not more than 150 cm$^2$.

14. Non-tacky skid resistance providing sheet according to claim 12 or 13 wherein said second major surface has a static coefficient of friction of at least 1.5 relative to a stainless steel surface.

15. Non-tacky skid resistance providing sheet according to any of claims 12 to 14 wherein the thickness of said skid resistance providing sheet is between 1mm and 2.5mm.

16. Non-tacky skid resistance providing sheet according to any of claims 12 to 15 wherein said second major surface of said non-tacky skid resistance providing sheet has a layer consisting of one or more compounds selected from the group consisting of polyolefin based polymeric materials and materials based on thermoplastic elastomer materials.

Fig. 1

Fig. 2

**Fig. 3**

**Fig. 4**

EP 1 106 436 A1

**European Patent Office**

**EUROPEAN SEARCH REPORT**

Application Number

EP 99 20 4179

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 549 948 A (KIMBERLY-CLARK CORPORATION) 7 July 1993 (1993-07-07) * the whole document * | 1,12 | B60R7/02 |
| A | US 5 713 548 A (G.B. BOYER) 3 February 1998 (1998-02-03) * the whole document * | 1,12 | |
| A | DE 35 05 409 A (B.M.W. AG) 21 August 1986 (1986-08-21) * figures 1-3 * | 1,12 | |
| A | US 4 180 890 A (G.C. BRUMLIK) 1 January 1980 (1980-01-01) * the whole document * | 1,12 | |
| A | US 4 536 433 A (Z.L. SAGI) 20 August 1985 (1985-08-20) * column 3, line 6 - column 4, line 10; figures 1-3 * | 1 | |
| A,D | US 5 065 922 A (C.C. HARRIS1-5) 19 November 1991 (1991-11-19) | 1 | TECHNICAL FIELDS SEARCHED (Int.Cl.7) B60R |
| A,D | US 4 838 745 A (J.P. HAYDOCK) 13 June 1989 (1989-06-13) * column 3, line 4-41; figures 1-7 * | 1 | |

The present search report has been drawn up for all claims

| Place of search | Date of completion of the search | Examiner |
|---|---|---|
| THE HAGUE | 26 April 2000 | Kusardy, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**

EP 99 20 4179

This annex lists the patent family members relating to the patent documents cited in the above–mentioned European search report.
The members are as contained in the European Patent Office EDP file on
The European Patent Office is in no way liable for these particulars which are merely given for the purpose of information.

26–04–2000

| Patent document cited in search report | | Publication date | Patent family member(s) | | Publication date |
|---|---|---|---|---|---|
| EP 549948 | A | 07–07–1993 | CA | 2070139 A | 01–07–1993 |
| | | | JP | 5331305 A | 14–12–1993 |
| | | | MX | 9207126 A | 01–06–1993 |
| | | | CA | 2070138 A | 01–07–1993 |
| US 5713548 | A | 03–02–1998 | AU | 5564896 A | 18–11–1996 |
| | | | WO | 9633632 A | 31–10–1996 |
| DE 3505409 | A | 21–08–1986 | NONE | | |
| US 4180890 | A | 01–01–1980 | US | 3922455 A | 25–11–1975 |
| US 4536433 | A | 20–08–1985 | NONE | | |
| US 5065922 | A | 19–11–1991 | NONE | | |
| US 4838745 | A | 13–06–1989 | NONE | | |

EPO FORM P0459

For more details about this annex : see Official Journal of the European Patent Office, No. 12/82